# EUROPEAN PATENT SPECIFICATION

(11) **EP 0 417 976 B1**
(45) Date of publication and mention of the grant of the patent: **01.05.1996**
(21) Application number: 90309764.0
(22) Date of filing: 06.09.1990
(51) Int. Cl.: G01N 30/72, G01N 30/80

(54) **Liquid chromatography mass spectrometry method and apparatus**
Verfahren und Vorrichtung für Flüssigkeitschromatographie gekoppelt mit Massenspektrometer
Procédé et dispositif de chromatographie en phase liquide en combinaison avec un spectromètre de masse

(30) Priority: 12.09.1989 JP 236683/89; 28.08.1990 JP 225906/90
(43) Date of publication of application: 20.03.1991
(73) Proprietor: Eisai Co., Ltd., Tokyo (JP)
(72) Inventor: Asakawa, Naoki, Tsukuba-shi, Ibaragi-ken (JP); Ohe, Hiroshi, Tsukuba-shi, Ibaragi-ken (JP); Yoshida, Yutaka, Honjoh-shi, Saitama-ken (JP); Sato, Tadashi, Abiko-shi, Chiba-ken (JP); Nezu, Yukuo, Moriya-machi, Kitasohma-gun, Ibaragi-ken (JP); Oda, Yoshiya, Tsukua-shi, Ibaragi-ken (JP)
(74) Representative: Rackham, Stephen Neil

(56) References cited:
- JOURNAL OF CHROMATOGRAPHY. vol. 474, 14 July 1989, AMSTERDAM NL pages 265 - 273; LUITJEN ET AL.: 'liquid chromatography-mass spectrometry of trace compounds with a moving belt interface and multi-dimensional chromatography'
- JOURNAL OF CHROMATOGRAPHY. vol. 474, 14 July 1989, AMSTERDAM NL pages 59 - 68; KOKKONEN ET AL: 'applicability of continuous-flow fast atom bombardment liquid chromatography-mass spectrometry in bioanalysis dextromethorphan in plasma'
- JOURNAL OF CHROMATOGRAPHY. vol. 474, 17 July 1989, AMSTERDAM NL pages 257 - 263; WALHAGEN ET AL.: 'coupled column chromatography-mass spectrometry thermospray liquid chromatographic-mass spectrometric and liquid chromatographic-tandem mass spectrometric analysis of metropol enantiomers in plasma using phase-system switching'
- JOURNAL OF CHROMATOGRAPHY. vol. 474, 17 July 1989, AMSTERDAM NL pages 301 - 316; ESCOFFIER AT AL.: 'comparision of open-tubular liquid chromatography-mass spectrometry and direct liquid introduction liquid chromatography-mass spectrometry for the analysis of metribuzin and its metabolites in plant tissue and water samples'
- JOURNAL OF CHROMATOGRAPHY. vol. 474, 14 July 1989, AMSTERDAM NL pages 5 - 19; VAN DER GREEF ET AL.: 'liquid-chromatography-mass spectrometry the need for a multidimensional approach'

## Description

The present invention relates to exchange method of mobile phase in high-performance liquid chromatography mass spectrometry and its apparatus constituted in such a way that the mobile phase which can introduce mobile phases and components (containing substances) suitable for the components to be separated and to be partially taken into a mass spectrometer may be freely exchanged in high-performance liquid chromatography mass spectrometry.

The conventional high-performance liquid chromatography mass spectrometry has been performed as shown in Fig. 14. That is to say, (F₀)is a container which has a mobile phase (L₀) in it, (P₀) is a pump, (IJ₀) is an injector which injects a sample to be analyzed, (C₀) is a separating column, (D₀) is a detector, (MS₀) is a mass spectrometer, and these are connected to each other by lines for sending liquid.

And, the apparatus is set up in such a way that the mobile phase (L₀) which is sent by the pump (P₀) as liquid is sent into the separating column (C₀) together with the sample injected from the injector (IJ₀), there components contained in the sample are separated into each component, and then introduced into the mass spectrometer (MS₀). The presence of the components to be introduced into the mass spectrometer (MS₀) can be previously detected by the detector (D₀).

At the introducing part of the mass spectrometer (MS₀), the mobile phase (L₀) is first removed and simultaneously the aimed components are ionized and analyzed, however there are several methods regarding the removing means and the ionizing means, and usable mobile phases and analyzable components are restricted by some method.

This method includes, for example, Spray method (thermo-spray method, atmospheric spray method, particle beam method), frit FAB method, and the like.

However, the conventional method has the following troubles.

A. In case of the thermospray method, the presence of an electrolyte is indispensable to ionization, and it is necessary to use a buffer for the mobile phase in the high-performance liquid chromatography mass spectrometry. With regard to buffers to be used, however, when nonvolatile buffers such as phosphate buffer and the like are used, the buffer components are deposited on the metallic nozzle of the introducing part of the mass spectrometer, and the mass spectrometry becomes impossible. Accordingly, for the mobile phase in the high-performance liquid chromatography mass spectrometry the volatile buffers such as ammonium acetate and the like must be used, and as a result the components to be separated are extremely restricted.

B. In case of frit FAB method, matrix to be required for ionization, for example, glycerol, ethylenediamine and the like is added to the mobile phase. However components to be separated are extremely restricted according to the kind of matrix. Also, since the buffer used in the mobile phase enters directly the mass spectrometer, said buffer is restricted to such substance which can be easy to ionize the aimed components, and components to be separated are extremely limited like the thermo-spray method in the high-performance liquid chromatography mass spectrometry. Therefore, recently aimed components which can be separated by the high-performance liquid chromatography mass spectrometry are neutral substances which can be separated without using buffers in the mobile phase or a part of ionic components (acidic or basic compounds) which can be separated in the mobile phase of volatile buffers such as ammonium acetate, and said aimed components are extremely restricted. Especially, compounds used in medicines include comparatively many kinds of ionic compounds, therefore the conventional high-performance liquid chromatography mass spectrometry can not often cope with them.

The document Journal of Chromatography, vol. 474, 14 July 1989, Amsterdam NL, pages 59-68, Kokkonen et al, describes a phase switching system in which:
in a 1st process the components contained in a sample to be analyzed are separated using a first mobile phase A;
in a 2nd process only the components of analytical interest are caught by a trapping column after diluting the said first mobile phase A with a dilute solution; and,
in a 3rd process the components of analytical interest are sent to a mass spectrometer using a second mobile phase B and are there analyzed.

According to a first aspect of this invention a method of liquid chromatography mass spectrometry as claimed in the preamble of claim 1, is characterised in that the components of analytical interest separated in the 1st process are collected and retained as separate fractions.

According to a second aspect of this invention a liquid chromatography mass spectrometer apparatus as claimed in the preamble of claim 4 is characterised in that the 2nd section includes a retainer having multiple branches for retaining and collecting separate fractions of the components separated by the first section.

The present invention increases the selectivity of the components by selecting the mobile phase respectively in the separating process of the components present in the sample and in the sending process of the components after separation to a mass spectrometer.

The method and apparatus enable the components separated in the 1st process to be retained, a sufficient amount of the components can be taken as a sample and the mass analysis can be performed by injecting the sample several times even if the amount of the components of interest are present only in very small quantities.

In addition, if each different mobile phase is respectively used for the mobile phase A and the mobile phase B, the optimum mobile phase can be freely selected for the component to be separated, so that the component which has not hitherto been analyzed has come to be analyzed.

Preferably, a separating column is used for separating the components contained in the sample in the 1st process.

In addition, if a process is added wherein the components of analytical interest caught by a trapping column are further separated in the 3rd process, for example, by a further separating column, more precise mass spectrometry is possible even if the components of interest are not satisfactorily separated in the 1st process and therefore the reliability of analysis can be enhanced.

As mentioned above, the optimum mobile phase for the components to be separated can be freely selected on-line by the exchange method of mobile phase in high-performance liquid chromatography mass spectrometry and its apparatus of this invention, therefore the components which have not been hitherto analyzed may be analyzed. Moreover, individual valves, pumps, and the like can be optionally controlled, and the operation performance is remarkably excellent.

The above and other aspects of the invention will be seen by reference to the description taken in connection with the accompanying drawings, in which:

Fig. 1 is the schematic explanatory drawing of the high-performance liquid chromatography mass spectrometric apparatus which is an example of this invention.

Fig. 2 is the schematic explanatory drawing of six-port valves (V₁) and (V₄).

Fig. 3 is the schematic explanatory drawing of a sampling part.

Figs. 4, 5 are chromatograms of α -tocopherol by a detector (D₁) and a detector (D₂) respectively.

Figs. 6, 7 are the mass spectrograms of -tocopherol analyzed by the mass spectrometer.

Fig. 8 is a chromatogram of Experiment 2 wherein a column (C₃) for separating the components is used.

Fig. 9 is a chromatogram wherein the column (C₃) is not used in case of Fig. 8.

Fig. 10 is a chromatogram oF Experiment 3 wherein the sample is α, β and δ -tocopherol.

Fig. 11 is a chromatogram wherein the whole lines are constituted with stainless pipes whose inside diameter is 0.1 mm.

Fig. 12 is a chromatogram wherein only a line (36) is constituted with wide stainless pipe whose inside diameter is 0.8 mm.

Fig. 13 is a chromatogram of Experiment 5 wherein the sample is verapamil.

Fig. 14 indicates a conventional high-performance liquid chromatography mass spectrometric apparatus.

Examples of the present invention shall be illustrated below.

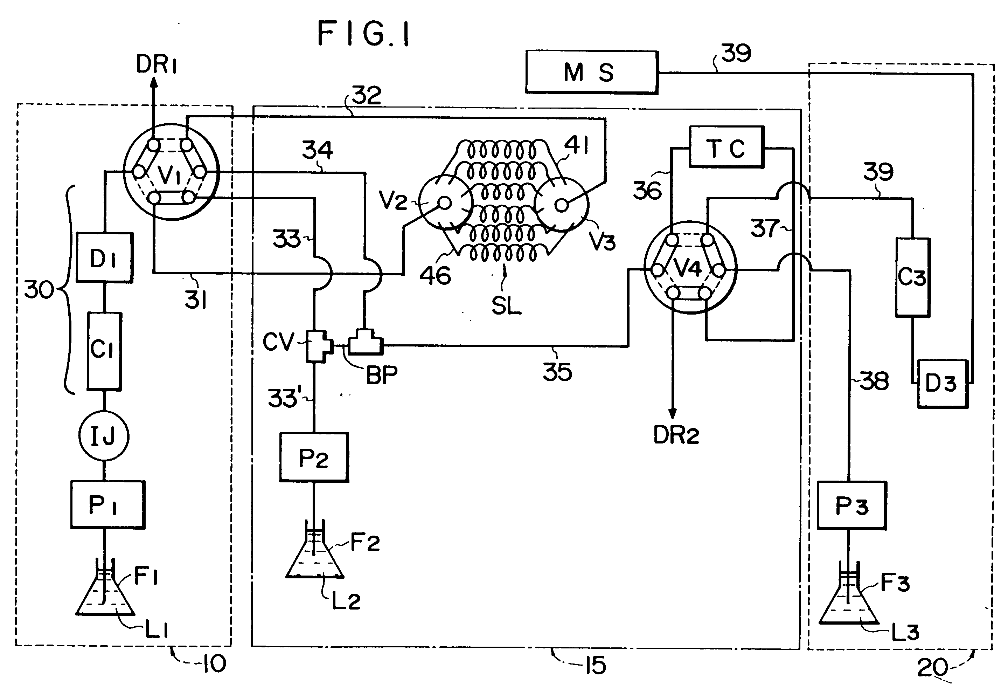

In Fig. 1, (10) is 1st section where separation is carried out. (F₁) is a container in which the mobile phase A (L₁) for separating the aimed components is present, and the mobile phase A (L₁) is used for separating the aimed components by selecting appropriately the optimum buffer.

(P₁) is a pump, (IJ) is an injector, (C₁) is a separating column, (D₁) is a detector, (V₁) is a six-port valve for changing over the line, (DR₁) is a discharging drain for discharging the unnecessary components together with the mobile phase A, and these are connected to each other by means of the lines comprised of stainless pipes and the like.

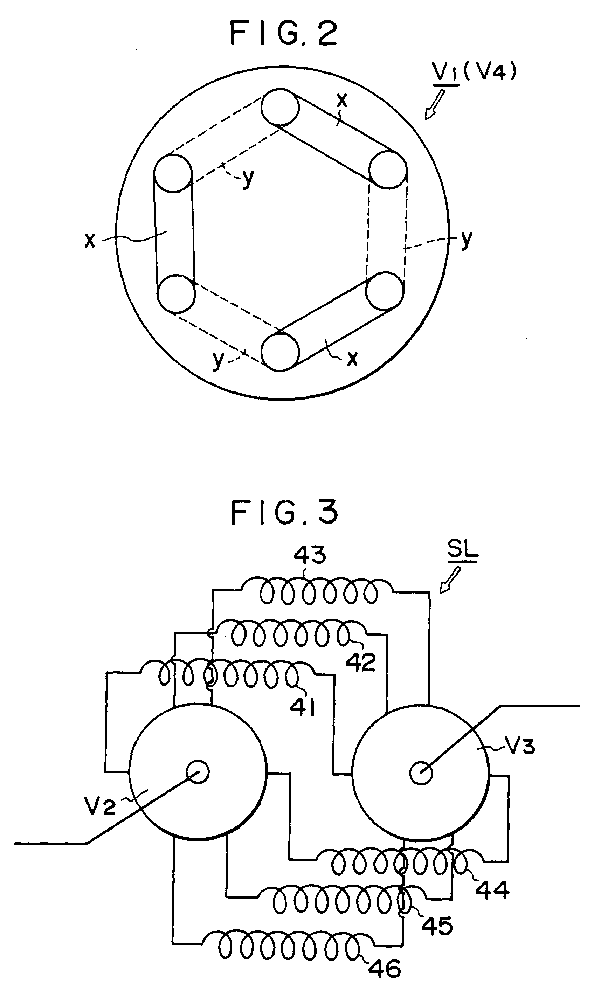

Fig. 2 indicates the changing state of lines performed by six-port valve (V₁), and said changing state is set up in such a way that the lines connecting to six-port valve (V₁) may be changed over to full lines (x) or dotted lines (y) by operating alternately a cock (not shown).

In Fig. 1, (20) is 3rd section which sends the components separated in lst section into a mass spectrometer (MS), and (F₃) is a container holding the mobile phase B (L₃) in it. For the mobile phase B (L₃) it is used a mobile phase containing a volatile buffer and a matrix necessary to elute the components from a trapping column (TC) described below, for example, the mixed solution of methanol or acetonitrile and acetic acid buffer or the like can be used, however the mobile phase suitable for a substance is appropriately used. In addition, (P₃) is a pump, (C₃) is a separating column, and (D₃) is a detector.

There is 2nd section (15) between 1st section (10) and 3rd section (20), (F₂) is a container full of a dilute solution (L₂) for diluting the mobile phase, (P₂) is a pump, (BP) is a diluting by-pass through which the dilute solution passes, (SL) is a sampling part, (V₂) and (V₃) are changing valves for changing over the loop of the sampling part (SL).

In addition, the constitution is set up in such a way that the flow rate of the dilute solution (L₂) which is poured from a by-pass may be adjusted by a flow rate-adjusting valve (CV).

As shown in Fig. 3, the sampling part (SL) is equipped with 6 loops from loop (41) to loop (46) in order that the pathway through which the mobile phase passes can be selectively changed over to an optional loop by changing the change-over valves (V₂), (V₃). In addition, the number of the loops can be optionally decided, for example, the number of the loops can be more increased by installing more change-over valves.

Thus, the components are separated in 1st section (10) in order that the separated components may be divided into different component groups (41) -(46) respectively and retained separately.

(V₄) is a six-port valve for changing the lines, (DR₂) is a discharging drain, and (TC) is a trapping column. The six-port valve (V₄) can change over the path as illustrated beforehand in Fig. 2. For the trapping column (TC), a column of the same mode as column (C₃) is used so as to adsorb the aimed components, however a column specially designed for the high-performance liquid chromatograpby is not necessarily used, any column having a certain degree of pressure resistance can be used. In accordance with the substance to be separated and analyzed, the columns (C₁) and (C₃) are also appropriately selected from the various modes of columns, for example, in view of a normal phase, reversed phase, ion exchange, gel permination chromatograpby (GPC) hydrophobic chromatography, affinity, optical resolution chromatography, and the like.

The exchange means of the mobile phase shall be illustrated below using the apparatus of this invention constituted above.

Further, lines connected to each part are (30) to (39) as shown in Fig. 1. First of all, in 1st section (1st process), a mobile phase A (L₁) is sent into a line (30) by operating a pump (P₁), and a sample is injected From an injector (IJ). The sample passes through the separating column (C₁) together with the mobile phase A (L₁), and there the sample is separated into each component contained in the sample, then each separated component is monitored by the detector (D₁).

Next, in 2nd section (2nd process), each component present in the mobile phase A is sent through the six-port valve (V₁) into the line (31) and there is retained in the prescribed loops (41) to (46) respectively.

In addition, changing-over of the valves (V₂) and (V₃) is performed in accordance with the detecting signal of the detector (D₁) in order that each component contained in the sample may be retained in each different loop.

As mentioned above, a proper quantity of the components is gathered in the loop, thereafter the operation of the pump (31) is stopped, and the line (33) and the line (31) are communicated each other by changing over the six-port valve (V₁).

In this state, by operating a pump (P₂) the dilute solution (L₂) For the mobile phase present in a container (F₂) is sent into the sampling part (SL) from lines (33′), (33), valve (V₁) and line (31), the components are pushed out together with mobile phase A (L₁) and passed through line (32), valve (V₁) and lines (34), (35), then introduced into a trapping column, and the components are caught by the trapping column (TC).

Also, in this case, while pouring a proper quantity of the dilute solution (L₂) for dilution of the mobile phase from the by-pass (BP), the components sent into the trapping column (TC) while adjusting the dilution ratio of the mobile phase, which facilitates to catch the components by the trapping column (TC). That is to say, the dilution ratio of the mobile phase easily caught by the trapping column (TC) are different respectively according to the kinds of the components so that the dilution ratio must be changeable so as to catch the component by the trapping column (TC) easily. When a proper quantity of the dilute solution (L₂) used for dilution of the mobile phase A is poured therein from the by-pass used for dilution of the mobile phase A in order to adjust the dilution ratio of the mobile phase A suitable for the components, the trapping column (TC) facilitates to catch the components.

In addition, the constitution is set up in such a way that the dilute solution (L₂) sent from a line (33′) by operating the pump (P₂) is divided into two portions, one portion is poured into the intermediate part situated between line (34) and line (35) from the by-pass (BP), and another portion is made to pass through line (33) and to push out the components present in the sampling part (SL) together with the mobile phase A (L₁). Therefore, for instance, if the degree of valve opening can be changed by providing a flow rate-adjusting valve (CV) in the by-pass (BP), the pouring amount of the dilute solution used for diluting the mobile phase A can be easily adjusted according to the kinds of the components so that the best dilution ratio to a component can be obtained so as to catch the component by trapping column (TC) easily.

The object of the dilute solution (L₂) is also to catch the aimed components by the trapping column (TC) and to further remove the buffer present in the mobile phase A (L₁) used 1st section (10), for example, in the reversed phase system water and the like can be used and in the normal phase system hydrocarbon and halogenated hydrocarbon (e.g., hexane, chloroform, and the like) can be used. Thus, the components and the mobile phase A are diluted and made to pass through a line (35) and sent through a line (36) into the trapping column (TC), where the components are caught. And, the mixed solution of the mobile phase A (L₁) and the dilute solution (L₂) passes through the trapping column (TC), goes via a line (37) and the six-port valve (V₄), and is discharged from a discharging drain (DR₂).

Next, in 3rd section (3rd process), the components collected in the trapping column (TC) are made to pass through a line (38) and a line (37) by changing over the six-port valve (V₄). In this state, by operating the pump (P₃) a mobile phase B (L₃) sent to the line (38), then by sending the mobile phase B into the trapping column (TC) from the opposite direction (from a line (37) via the valve (V₄)) the mobile phase B (L₃) is sent through the line (36), valve (V₄), and line (39) into the mass spectrometer (MS) and is analyzed.

Accordingly, the mobile phase A (L₁) used in 1st section (10) is rejected by the above-mentioned means and in 3rd section (20) the components are introduced into the mass spectrometer (MS) by using the mobile phase B (L₃), in order that the optimum mobile phase A (L₁) suitable for separating the components may be selected, and also the buffer and the matrix may be freely selected and added.

Thus, as shown in Fig. 1, if the constitution is set up in such a way that in 3rd section (20) the separating column (C₃) is further installed, the components are again separated into each component by this column (C₃), each component is detected by the detector (D₃) and is mass analyzed by the mass spectrometer (MS), if constituted above, then more precise mass spectrometry can be achieved and the reliability of analysis is enhanced by performing further separation by means of the separating column (C₃), even if the aimed components could not be separated satisfactorily in 1st section (10).

Also, as the results of the experiments, it was found that in case of installing the separating column (C₂) in 3rd section (20), if line (36) was composed of a thick pipe whose inside diameter was larger than that of other lines, separation by the separating column (C₃) could be better performed.

In addition, computerized control is possible for operating each pump or for changing-over the valve, the number of containers (F₁), (F₂) and pumps (P₁), (P₃) can be more increased, and the general-purpose properties of this apparatus can be more enhanced by selecting appropriately the suitable one from many kinds of mobile phases. Also, in accordance with the object, it is preferable to use a large-sized column for the separating column (C₁). When the mass spectrometer is frit FAB method it is preferable to use a semimicro bore column (inside diameter is about 20-30 mm, length is about 10-30 cm; on the other hand, as for ordinary column, inside diameter is about 4.0-6.0 mm, length is about 10-30 cm) or a micro bore column (inside diameter is about 0.3-1.2 mm, length is about 10-30 cm) for the separating column (C₂).

And, separating effect can be more exhibited by changing the separating mode of lst section (10) and 3rd section (20).

### EXPERIMENT

The results of experiment which was performed by using the apparatus of the present invention shall be illustrated.

### Experiment 1

A sample containing each 10 µ g of tocopherol homologue α, β, γ and δ respectively was used in this experiment. In 1st section (10), the experiment was performed under the condition that the separating column (C₁) was Inertsil ODS-2 (4.6 φ X 150 mm made by Gaschro Kogyo Co.,Ltd.), mobile phase A (L₁) was methanol, detection was at DV 275 nm, flow rate was 1.0 ml/min., in 3rd section (20), the experiment was performed under the condition that the column (C₃) was Inertsil ODS-2 (0.7φ X 150 mm made by Gaschro Kogyo Co.,Ltd.), mobile phase B (L₃) was methanol containing 0.5 % glycerol, detection was at UV 275 nm, flow rate was 0.02 ml/min.

And, dilute solution (L₂) was a mixed solution (10: 90) of methanol and water, the flow rate was 0.5 ml/min, the trapping column (TC) was Inertsil ODS-2 (2.1 φ X 50 mm, made by Gaschro Kogyo Co.,Ltd.), the mass spectrometer was frit FAB System Mass Spectrometer (JOEL JMS-8HX 100, made by Nippon Denshi Co.,Ltd.).

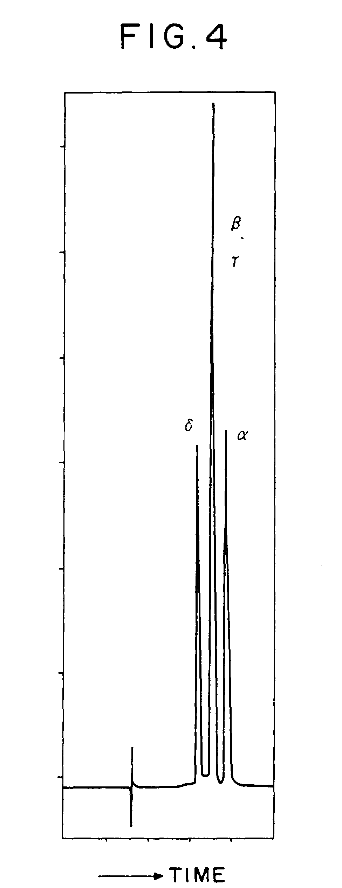

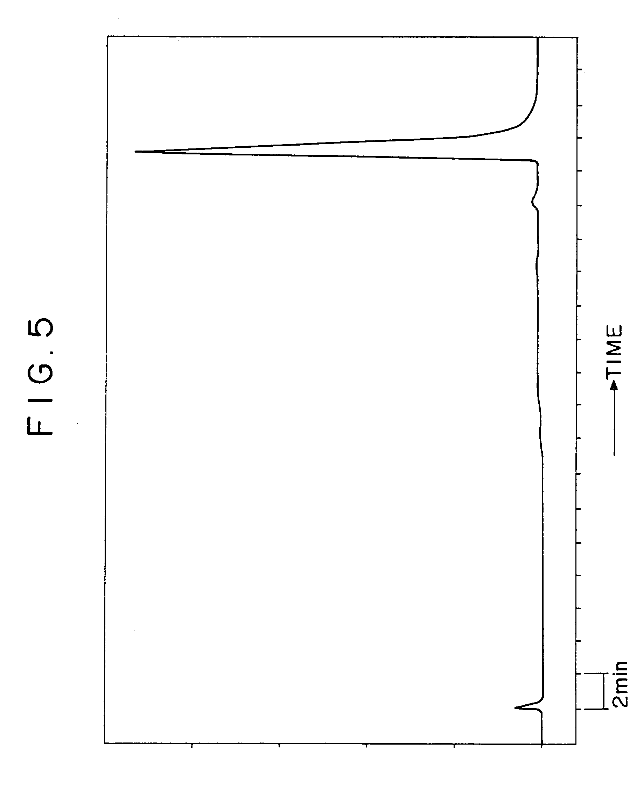

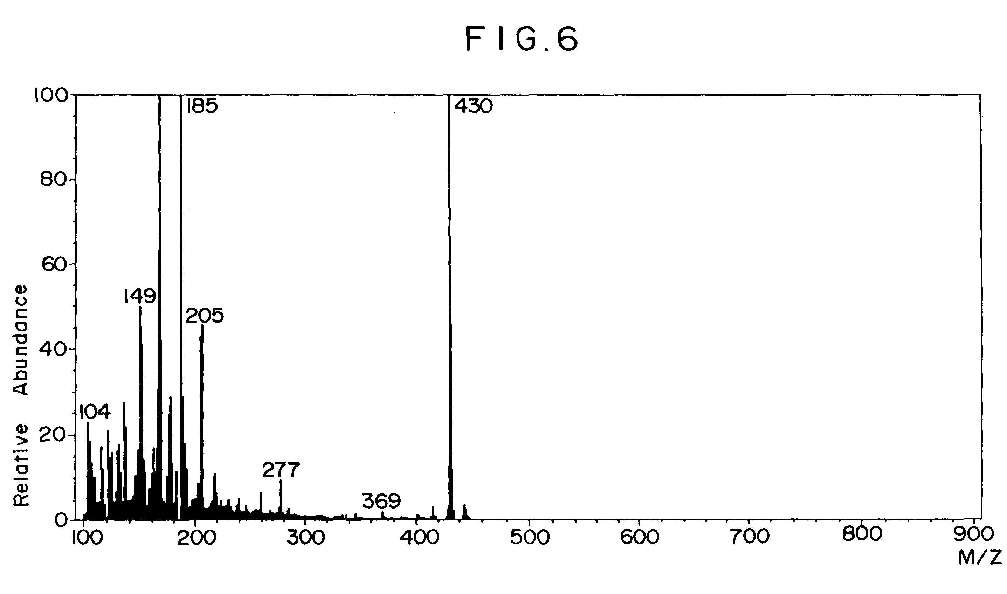

In 1st section (10), the detector (D₁) monitored that α -tocopherol was separated and eluted (see Fig. 4), and the separated α -tocopherol was taken in the sampling part (SL) by changing over a valve (V₁). In addition, the dilute solution (L₂) was sent, α -tocopherol was caught by the trapping column (TC) and was monitored by the detector (D₃) (see Fig. 5), then α -tocopherol was introduced into the mass spectrometer (MS) and analyzed. The mass spectrogram obtained in this analysis was shown in Fig. 6. As seen from Fig. 6, the molecular ion peak 430 of α -tocopherol could be measured with high sensibility.

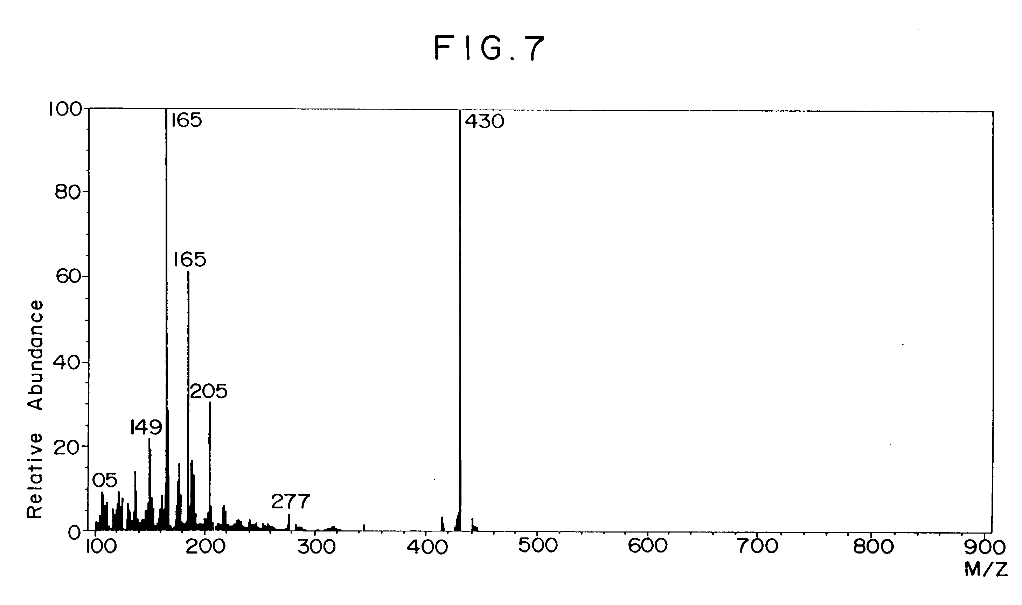

On the other hand, in 1st section (10) a 1.25 % phosphoric acid was added into the mobile phase A and the mass analysis was performed, as a result the molecular ion peak 430 of α -tocopherol could be measured with high sensibility without showing any influence caused by the addition of phosphoric acid which is a non-volatile buffer (see Fig. 7).

As mentioned above, the mass analysis was performed by using this apparatus without showing any influence even if non-volatile buffer such as phosphoric acid which restricts ionization necessary for the mass analysis was used.

### Experiment 2

The degree of separating effect in 3rd section (20) was examined after α-tocopherol 1 g being caught by the trapping column (TC) in cases of the separating column (C₃) being installed in 3rd section (20) and not installed.

The experiment was carried out under the condition that in 3rd section (20), a column (C₃) was inertsil ODS-2 (0.7 X 150 mm made by Gaschro Kogyo Co.,Ltd.) a mobile phase B (L₃) was a solution (80 : 20) of methanol, detection was carried out at UV 282nm, flow rate was 0.02 ml/min, dilute solution (L₂)used for diluting the mobile phase was a mixed solution (30 : 70) of methanol and water, flow rate was 1.0 ml/min, trapping column (TC) was Inertsil ODS-2 (4.0 φ X 10 mm made by Gaschro Kogyo Co.,Ltd.). As a result, if the constitution is set up in such a way that in 3rd section (20) the separating column (C₃) is further installed after the components caught by the trapping column (TC), each component was concentrated and separated satisfactorily.

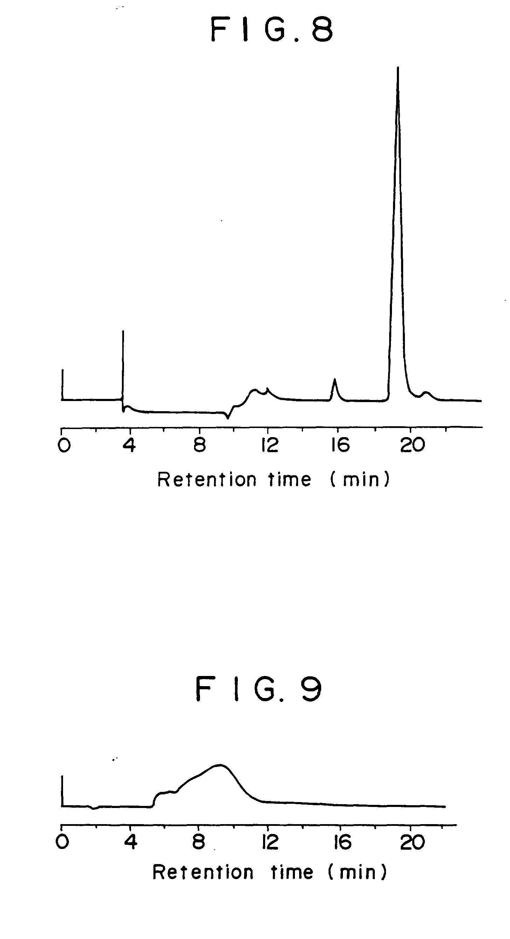

That is to say, in case of installing the separating column (C₃) in 3rd section like this invention, the state monitored by the detector (D₃) was obtained as shown in Fig. 8, after having the components passed, the result indicating a remarkable sharp peak was obtained.

On the contrary, in case of non-installing the column (C₃) wherein each component was introduced into the detector (D₃) from the trapping column (TC) directly, the state monitored by the detector (D₃) was obtained as shown in Fig. 9, the result indicating a broad peak was obtained. As mentioned above, by installing the column (C₃), each component was concentrated and introduced into a mass spectrometer (MS), so that it was found that the concentrating effect of the column (C₃) can be more exhibited.

### Experiment 3

Each 1 µ g of α, β, and δ -tocopherol was respectively caught at the same time by the trapping column (TC) and separated by the separating column (C₃) placed in 3rd section.

The experiment was carried out under the condition that in 3rd section (20), a column (C₃) was inertsil ODS-2 (0.7 X 150 mm made by Gaschro Kogyo Co.,Ltd.) a mobile phase B was methanol, detection was carried out at UV 275 nm, flow rate was 0.02 ml/min, dilute solution (L₂) used for diluting the mobile phase A was a mixed solution (30 : 70) of methanol and water, flow rate was 1.0 ml/min, trapping column (TC) was Inertsil ODS-2 (4.0 φ X 10 mm made by Gaschro Kogyo Co.,Ltd.).

Also, the apparatus was constituted in such a way that only the inside diameter of lines (30)-(39) was 0.1 φ, then experiment was carried out.

α, β and δ -tocopherol eluted in 1st section were intentionally mixed and taken in the same loop of the sampling part (SL) without changing over the valve (V₁). Thus, α, β, and δ -tocopherol were caught by the trapping column (TC) in the mixed state, and the separation was performed by means of the separating column (C₃) placed in 3rd section (20) by changing over the valve (V₄).

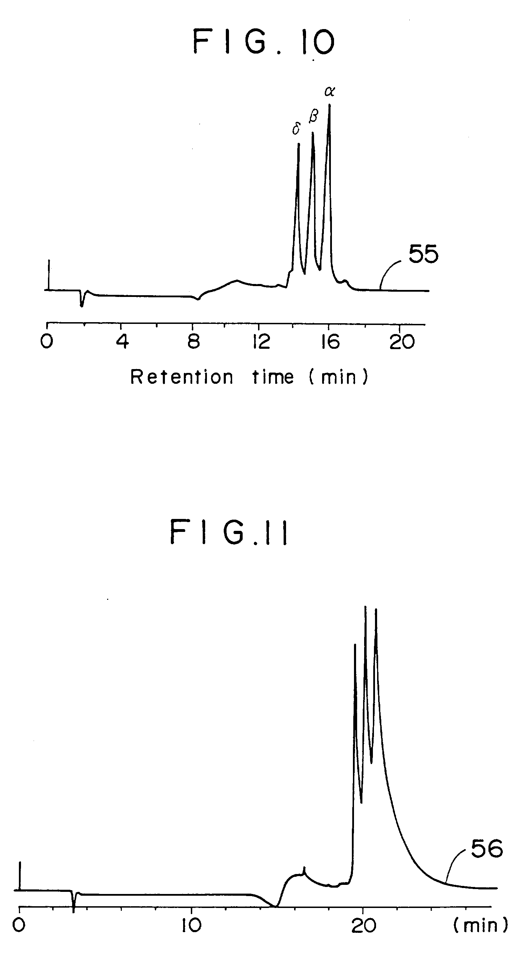

As mentioned above, the state wherein α, β and δ -tocopherol were being separated was monitored by a detector (D₃), as a result, it was found that said state was shown as the zigzag line (55) of Fig. 10, and the mixed tocopherols could be separated into α, β and δ -tocopherol respectively.

As a result, it was found that even if the aimed components could not be satisfactorily separated in 1st section (10), highly precise mass spectrometry with shapness of separation could be performed, and the reliability of analysis could be enhanced by setting up the constitution wherein further separation was carried out by the separation column (C₃) installed in 3rd section (20).

### Experiment 4

The experiment was performed under the condition that the diameter of the separating column (C₃) in 3rd section which was smaller than Experiment 2 was 0.4 φ X 150 mm. It was recognized the relation between the diameter of pipe in line (36) and the separation.

Each 1 µ g of α, β, and δ -tocopherol was restectively caught at the same time by the trapping column (TC) and separated by the separating column (C₃) placed in 3rd section (20). Further the experiment was carried out under the condition that in 3rd section (20), a column (C₃) was Inertsil ODS-2 (0.4 φ X 150 made by Gaschro Kogyo Co.,Ltd.) a mobile phase B (L₃) was a mixed solution (80 : 20) of methanol and ethanol, detection was carried out at UV 282 nm, flow rate was 0.01 ml/min, dilute solution (L₂) used for diluting the mobile phase was a mixed solution (30 : 70) of methanol and water, flow rate was 1.0 ml/min, trapping column (TC) was Inertsil ODS-2 (4.0 φ X 10 mm made by Gaschro Kogyo Co.,Ltd.).

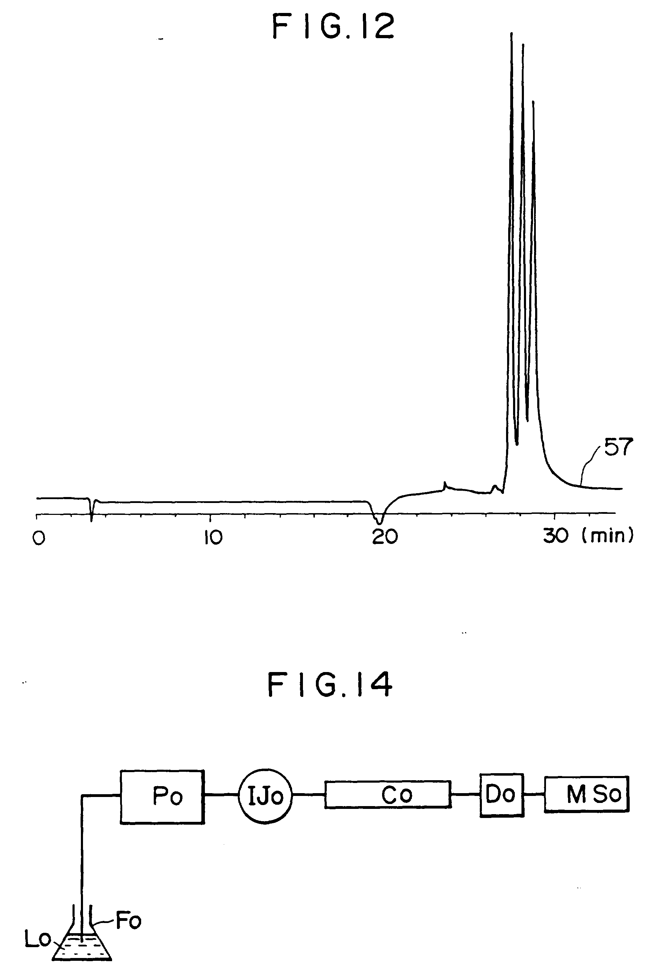

When all the lines were constetuted with pipes whose inside diameter was 0.1 mm, the state wherein the components were being separated was monitored by the detector (D₃). As a result, the curyed line (56) of Fig. 11 was obtained, the better separation could not be performed. However, the state wherein a pipe whose inside diameter was 0.8 X 100 mm was used only for the line (36) and other lines were constituted with stainless pipes whose inside diameter was 0.1 mm was monitored, then the curved line (57) was obtained as shown in Fig. 12 so that the separation between the components could be better performed.

As a result, it was found that if line (36) was constituted with a thick pipe whose inside diameter was larger than that of other lines, separation by the separating column (C₃) could be better performed.

In addition, it is considered that when the inside diameter of the separating column (C₃) is decreased and that of the line (36) is increased, the gradient effect for separation has been generated in the line (36).

### Experiment 5

In the present invention, the optimum mobile phase A and B suitable for separating the components may be selected respectively for the separating column (C₁) and (C₃). Also separating effect can be more exhibited by selecting the separating mode of the column (C₁) and (C₃).

The analysis for a plasma sample containing verapamil was performed by using a reversed phase mode of the column (C₁) and optical resolution mode of the column (C₃) respectively so that verpamil was separated in the column (C₁) and further an optical isomer was separated in the column (C₃).

In first section (10) a column was Inertsil ODS-2 (4.6 φ X 150 mm made by Gaschro Kogyo Co.,Ltd.), mobile phase A was a mixed solution (3 : 7 pH = 3.0) or acetonitrile containing 5 mM 1-pentane sodium sulfonate: water, detection was carried out at try 230 nm, flow rate was 1.0 ml/min; in 3rd section (20), a column was Ultron ES-OVM (4.6 1D X 150 mm made by Shinwa Kako Co.,Ltd.), mobile phase B was a mixed solution of tetrahydrofuran: ethanol: water (1 : 8 : 91). detection was carried out at try 230 nm, flow rate was 1.0 ml/min.

And, the dilute solution (L₂) used for diluting the mobile phase was a mixed solution (pH = 7.5) of 5 mM dipotassium hydrogen phosphate and potassium dihydrogen phosphate, flow rate was 4.0 ml/min, a trapping column (TC) was Ultron ES-OVMG (10 mm X 4.0 mm 1D made by Shinwa Kako Co.,Ltd).

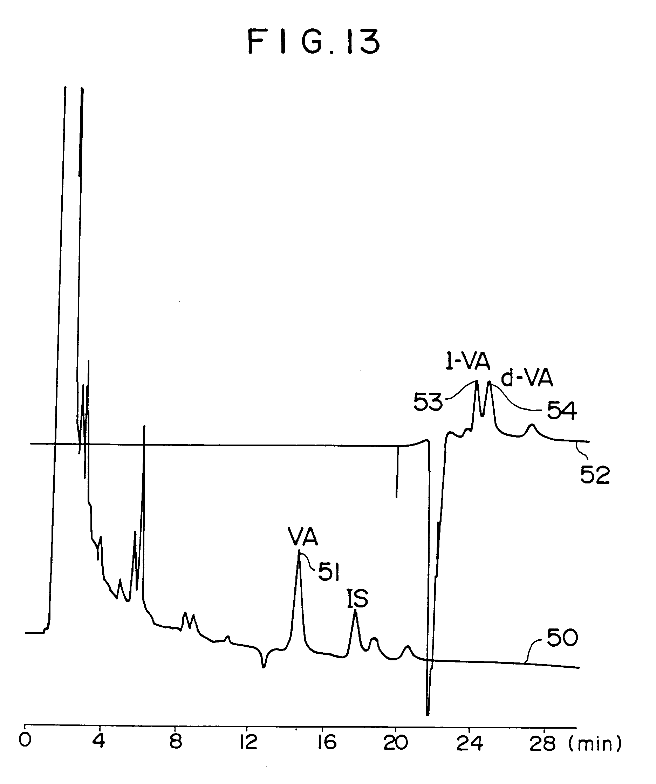

In the same manner as Experiment 1, the state where verapamil was separated and eluted in 1st section (10) was monitored by the detector (D₁), and the verapamil was taken in the sampling part (SL) by changing over the valve (V₁). The chromatogram(50) of Fig. 13 shows the monitored state by detector (D₁), and a peak (51) indicates that verapamil has been detected.

After thus sampling verapamil, verapamil was caught by means of the trapping column (TC) by sending the dilute solution (L₂), therefore, verapamil was again separated by the separating column (C₃) placed in 3rd section (20) by changing over the valve (V₄).

As mentioned above, the state wherein verapamil was again separated by the separating column (C₃) was monitored by the detector (D₃), then said state was indicated as the chromatogram (52) of Fig. 13, as the result of analysis of this curved line, it was found that at a peak (53) the D (dextro-rotatory) substance of verapamil had been separated, and at a peak (54) the L (levo-rotatory) substance of verapamil had been separated.

As for Experiment 2 through 5 it was found that the installation of the separating column (C₃) in addition to that of the separating column (C₁) is very useful in the system of the present invention.

## Claims

1. A method of liquid chromatography mass spectrometry, comprising:
a 1st process wherein the components contained in a sample to be analyzed are separated using a first mobile phase A;
a 2nd process wherein only the components of analytical interest are caught by a trapping column after diluting the said first mobile phase A with a dilute solution; and,
a 3rd process wherein the components of analytical interest are sent to a mass spectrometer using a second mobile phase B and are there analyzed, characterised in that the components of analytical interest separated in the 1st process are collected and retained as separate fractions.

2. A method according to claim 1, in which a separating column is used for the separation of the components contained in the sample in the 1st process.

3. A method according to claim 1 or 2, in which the components of analytical interest caught by the trapping column are further separated before being analyzed in the mass spectrometer.

4. A liquid chromatography mass spectrometer apparatus comprising:
a 1st section (10) for separating components present in a sample to be analyzed by using a first mobile phase A (L1);
a 2nd section (15) comprising:
an inserting line (33') for injecting a dilute solution (L2) for diluting the said first mobile phase A, and
a trapping column (TC) which allows said first mobile phase A to pass through but catches components carried by the dilute solution; and,
a 3rd section (20) for introducing the components caught by the trapping column (TC) into the mass spectrometer (MS) using a second mobile phase B (L3), characterised in that the 2nd section (15) includes a retainer (SL) having multiple branches (41-46) for retaining and collecting separate fractions of the components separated by the first section (10).

5. A spectrometer apparatus according to claim 4, in which a separating column (C1) is included in the 1st section (10) for separating the components of analytical interest contained in the sample.

6. A spectrometer apparatus according to claim 4 or 5, in which a separating column (C3) is included in the 3rd section (20) for further separation of the components before analysis in the mass spectrometer.

## Patentansprüche

1. Verfahren zur Flüssigkeitschromatografie gekoppelt mit Massenspektrometrie (LCMS) umfassend:
einen ersten Verfahrensschritt, in dem die in einer zu analysierenden Probe enthaltenen Komponenten unter Verwendung einer ersten mobilen Phase A voneinander getrennt werden,
einen zweiten Verfahrensschritt, in dem lediglich die Komponenten von analytischem Interesse durch eine Abfangsäule abgefangen werden, nachdem die genannte erste mobile Phase A mit einer verdünnten Lösung verdünnt worden ist, und
einen dritten Verfahrensschritt, in dem die Komponenten von analytischem Interesse unter Einsatz einer zweiten mobilen Phase B zu einem Massenspektrometer geführt und dort analysiert werden,
dadurch gekennzeichnet, daß die im ersten Verfahrensschritt voneinander getrennten Komponenten von analytischem Interesse gesammelt und als separate Fraktionen zurückgehalten werden.

2. Verfahren nach Anspruch 1, bei dem eine Trennsäule zur Trennung der in der Probe im ersten Verfahrensschritt enthaltenen Komponenten eingesetzt wird.

3. Verfahren nach Anspruch 1 oder 2, bei dem die analytisch interessierenden Komponenten, die durch die Abfangsäule abgefangen werden, weiter voneinander getrennt werden, bevor sie im Massenspektrometer analysiert werden.

4. Vorrichtung zur Flüssigkeitschromatografie, gekoppelt mit Massenspektrometrie, umfassend:
einen ersten Abschnitt (10) zum Trennen der in einer Probe vorliegenden, zu analysierenden Komponenten, unter Verwendung einer ersten mobilen Phase A (L1);
einen zweiten Abschnitt (15) umfassend:
eine Eingabeleitung (33') zum Einspritzen einer verdünnten Lösung (L2) zum Verdünnen der genannten ersten mobilen Phase A, und
eine Abfangsäule (TC), die der ersten mobilen Phase A ermöglicht, durchzulaufen, jedoch die von der verdünnten Lösung getragenen Komponenten abzufangen; und
einen dritten Abschnitt (20) zum Einführen der Komponenten, die durch die Abfangsäule (TC) abgefangen worden sind, in den Massenspektrometer (MS) unter Verwendung einer zweiten mobilen Phase B (L3), dadurch gekennzeichnet, daß der zweite Abschnitt (15) ein Rückhaltegefäß (SL) umfaßt, das vielfache Abzweigungen (41 - 46) zum Zurückhalten und
Sammeln getrennter Fraktionen der Komponenten bildet, die durch den ersten Abschnitt (10) voneinander getrennt worden sind.

5. Spektrometervorrichtung nach Anspruch 4, bei der eine Trennsäule (C1) im ersten Abschnitt (10) zum Trennen der analytisch interessierenden Komponenten vorgesehen ist, die in der Probe enthalten sind.

6. Spektrometervorrichtung nach Anspruch 4 oder 5, bei der eine Trennsäule (C3) im dritten Abschnitt (20) zum weiteren Abtrennen der Komponenten vor der Analyse im Massenspektrometer vorgesehen ist.

## Revendications

1. Méthode de chromatographie liquide couplée à un spectromètre de masse, comprenant:
un premier procédé dans lequel les constituants contenus dans un échantillon à analyser sont séparés à l'aide d'une première phase mobile A;
un deuxième procédé dans lequel seuls les constituants d'intérêt analytique sont piégés par une colonne de piégeage après dilution de la première phase mobile A avec une solution diluée; et
un troisième procédé dans lequel les constituants d'intérêt analytique sont envoyés vers un spectromètre de masse à l'aide d'une seconde phase mobile B, puis y sont analysés,
caractérisée en ce que les constituants d'intérêt analytique séparés dans le premier procédé sont recueillis et retenus en fractions séparées.

2. Méthode selon la revendication 1, dans laquelle une colonne de séparation est utilisée pour la séparation des constituants contenus dans l'échantillon du premier procédé.

3. Méthode selon la revendication 1 ou 2, dans laquelle les constituants d'intérêt analytique piégés par la colonne de piégeage sont encore séparés avant d'être analysés dans le spectromètre de masse.

4. Appareil de chromatographie liquide couplée à un spectromètre de masse comprenant:
une première section (10) pour séparer les constituants présents dans un échantillon à analyser à l'aide d'une première phase mobile A (L₁);
une deuxième section (15) comprenant:
une canalisation d'insertion (33') pour injecter une solution diluée (L₂) servant à diluer ladite première phase mobile A, et
une colonne de piégeage (TC) qui laisse passer la première phase mobile A, mais qui piège les constituants portés par la solution diluée; et
une troisième section (20) pour introduire les constituants piégés par la colonne de piégeage (TC) dans le spectromètre de masse (MS) à l'aide d'une seconde phase mobile B (L₃),
caractérisé en ce que la deuxième section (15) contient un récupérateur (SL) à plusieurs branches (41-46) pour recueillir et retenir des fractions séparées des constituants séparés par la première section (10).

5. Appareil à spectromètre selon la revendication 4, dans lequel une colonne de séparation (C₁) est incorporée dans la première section (10) pour séparer les constituants d'intérêt analytique contenus dans l'échantillon.

6. Appareil à spectromètre selon la revendication 4 ou 5, dans lequel une colonne de séparation (C₃) est incorporée dans la troisième section (20) pour séparer davantage les constituants avant l'analyse dans le spectromètre de masse.
